# EUROPÄISCHE PATENTANMELDUNG

(11) **EP 4 446 089 A1**
(43) Veröffentlichungstag der Anmeldung: **16.10.2024**
(21) Anmeldenummer: 23167557.0
(22) Anmeldetag: 12.04.2023
(51) Int. Cl.: B29C 48/92, B29C 48/405, B29C 48/76, B29C 48/57, B29B 7/72, B29B 7/82, B29B 7/84, B29B 7/48, B29B 17/00

(54) **VERFAHREN UND VORRICHTUNG ZUR AUFBEREITUNG VON KUNSTSTOFFMATERIAL**

(71) Anmelder: Coperion GmbH, 70469 Stuttgart (DE)
(72) Erfinder: Dreher, Felix, 70374 Stuttgart (DE)
(74) Vertreter: Ege Lee & Roider Patentanwälte

(57) **Zusammenfassung**

Verfahren zur Aufbereitung von Kunststoffmaterial (102), umfassend folgende Schritte: Zuführen des Kunststoffmaterials (102) in eine Schneckenmaschine (104) mittels einer Zuführvorrichtung; Plastifizieren des zugeführten Kunststoffmaterials (102) mittels der Schneckenmaschine (104) zu einer Kunststoffschmelze (106); und Aufbereiten der Kunststoffschmelze (106) mittels der Schneckenmaschine (104), wobei die Viskosität der Kunststoffschmelze (106) mittels der Schneckendrehzahl der Schneckenmaschine (104) eingestellt wird, sowie Vorrichtung (100) zur Aufbereitung von Kunststoffmaterial (102).

## Beschreibung

Die Erfindung betrifft ein Verfahren zur Aufbereitung von Kunststoffmaterial, beispielsweise Kunststoff-Recyclingmaterial und/oder Kunststoffabfall. Außerdem betrifft die Erfindung eine Vorrichtung zur Aufbereitung von Kunststoffmaterial, wie Kunststoff-Recyclingmaterial und/oder Kunststoffabfall.

Im mechanischen Recycling werden üblicherweise sortenreine Polymerstoffströme in einem Doppelschneckenextruder aufgeschmolzen, homogenisiert, entgast und anschließend regranuliert. Aus den gewonnenen Regranulaten können neue Produkte hergestellt werden. Eine Verarbeitungsmethode der Regranulate ist beispielsweise der Spritzguss, bei dem sich niedrige Viskositäten aufgrund des hohen Einspritzdrucks besser verarbeiten lassen. Beispielsweise ist Polyethylen hoher Dichte (HDPE) als ein Vertreter der recyclebaren thermoplastischen Polymere für diesen Prozess aufgrund seiner sehr zähen Eigenschaften nur bedingt geeignet. Ähnliches gilt auch für Polypropylen (PP).

Wünschenswert wäre, dass auch solche thermoplastischen Polymere besser verarbeitet und damit mehr Anwendungen für recyclebare Polymere mit zähen Eigenschaften ermöglicht werden können. Für eine bessere Verarbeitbarkeit wäre eine Verringerung der Zähigkeit, beispielsweise durch Erhöhung des Schmelzindex (Melt Flow Index, MFI), vorteilhaft. Der Schmelzindex ist ein Maß für die Viskosität. Die Verringerung der Zähigkeit kann beispielsweise entweder durch Zugabe eines Virgin Polymers mit einem höheren Schmelzindex oder durch Abbau des Kunststoffmaterials bei hohen Temperaturen erfolgen. Dabei ergeben sich aber drei entscheidende Herausforderungen. Je nach Produkt und Prozess ist nur ein enger Bereich für den Schmelzindex zulässig. Ferner kann die Eingangsviskosität des Kunststoffmaterials erheblich schwanken. Eine gezielte Steuerung des resultierenden Schmelzindex ist durch Zugabe eines Virgin Polymers nur sehr schwer möglich, wenn nicht sogar unmöglich. Nachteilig sind auch die Kosten für das Virgin Polymer und dessen Dosierung. Des Weiteren kann eine Online-Messung der Viskosität nicht immer gegeben oder möglich sein. Dadurch hat man während des Prozesses keine Kenntnis über den Schmelzindex der Kunststoffschmelze und damit keine Möglichkeit den Schmelzindex bzw. die Viskosität optimal einzustellen.

Der Erfindung liegt die Aufgabe zugrunde, ein eingangs genanntes Verfahren zur Aufbereitung von Kunststoffmaterial strukturell und/oder funktionell zu verbessern. Außerdem liegt der Erfindung die Aufgabe zugrunde, eine eingangs genannte Vorrichtung zur Aufbereitung von Kunststoffmaterial strukturell und/oder funktionell zu verbessern. Es ist daher eine Aufgabe der vorliegenden Erfindung, ein Aufbereitungsverfahren und eine Aufbereitungsvorrichtung bereitzustellen, welche die im Zusammenhang mit dem Stand der Technik aufgezeigten Probleme reduzieren bzw. beseitigen. Beispielweise ist es eine Aufgabe schwankende Eingangsviskositäten optimal ausgleichen zu können und/oder einen gewünschten Schmelzindex halten und/oder einstellen zu können.

Die Aufgabe wird gelöst mit einem Verfahren mit den Merkmalen des Anspruchs 1. Außerdem wird die Aufgabe gelöst mit einer Vorrichtung mit den Merkmalen des Anspruchs 14. Vorteilhafte Ausführungen und/oder Weiterbildungen sind Gegenstand der Unteransprüche, der Beschreibung und/oder den begleitenden Figuren. Insbesondere können die unabhängigen Ansprüche einer Anspruchskategorie auch analog zu den abhängigen Ansprüchen einer anderen Anspruchskategorie weitergebildet und/oder kombiniert sein. Ebenso können nachfolgend beschriebene Vorrichtungs- und Verfahrensmerkmale miteinander kombiniert und/oder weitergebildet werden.

Ein Aspekt betrifft ein Verfahren zur Aufbereitung von Kunststoffmaterial. Das Verfahren kann ein Aufbereitungsverfahren sein. Bei dem Verfahren kann das Kunststoffmaterial zunächst in eine Schneckenmaschine zugeführt werden. Das Zuführen des Kunststoffmaterials kann mittels einer Zuführvorrichtung und/oder Dosiereinrichtung erfolgen. Dabei kann das Zuführen des Kunststoffmaterials kontinuierlich und/oder dosiert erfolgen. Alternativ kann das Zuführen des Kunststoffmaterials diskontinuierlich erfolgen. Beispielsweise kann das Zuführen des Kunststoffmaterials über eine Zuführöffnung der Schneckenmaschine erfolgen. In einer Variante kann die Zuführöffnung eine Haupt-Zuführöffnung, z.B. Haupt-Einlauf, der Schneckenmaschine sein.

Das Kunststoffmaterial kann Kunststoff-Recyclingmaterial sein oder umfassen. Das Kunststoff-Recyclingmaterial kann Kunststoffabfall, z.B. Endverbraucher-Kunststoffabfall ("post consumer waste"), sein. Das Kunststoff-Recyclingmaterial liegt vorzugweise als Kunststoffpartikel vor, die gewaschen und/oder gereinigt sein können. Die Kunststoffpartikel können je nach Partikelgröße und/oder Partikelform beispielsweise als Kunststoffgranulat, Kunststoffflocken, Kunststofffasern oder Kunststoffpulver vorliegen. Die Kunststoffpartikel können daher ein Recyclat sein. Die Kunststoffpartikel können auch schnipselförmig und/oder flakeförmig sein. Insbesondere bildet das Kunststoff-Recyclingmaterial bzw. die Kunststoffpartikel Schüttgut, das beispielsweise mittels einer Extrusions- und/oder Granulieranlage verarbeitet bzw. hergestellt worden ist. Alternativ kann das Kunststoff-Recyclingmaterial auch geschreddert oder gemahlen worden sein. Ferner kann das Kunststoffmaterial eine niedrige Schüttdichte aufweisen. Das Kunststoffmaterial kann, insbesondere thermoplastische, Polymere aufweisen. Das Kunststoffmaterial kann ein Polyethylen, beispielsweise ein Polyethylen hoher Dichte (HDPE), und/oder ein Polypropylen (PP) aufweisen oder sein. Beispielsweise kann das Kunststoffmaterial ein HDPE-Kunststoffmaterial oder PP-Kunststoffmaterial aufweisen oder sein.

Bei dem Verfahren kann das zugeführten Kunststoffmaterial mittels der Schneckenmaschine zu einer Kunststoffschmelze plastifiziert werden. Unter Plastifizieren kann ein Aufschmelzen des Kunststoffmaterials verstanden werden. Die Kunststoffschmelze kann eine Temperatur zwischen 100°C und 400°C, beispielsweise zwischen 300°C und 400°C, insbesondere zwischen 350°C und 390°C, zum Beispiel etwa 370°C, aufweisen. Das Plastifizieren kann so erfolgen und/oder die Schneckenmaschine so gesteuert werden, dass eine bestimmte Schmelzetemperatur erreicht und/oder gehalten werden kann. Dabei kann das Plastifizieren mittels zumindest einer Behandlungselement-Welle der Schneckenmaschine erfolgen, beispielsweise in der Aufschmelzzone und/oder Mischzone der Schneckenmaschine. Die Behandlungselement-Welle der Schneckenmaschine kann mit einer Schneckendrehzahl angetrieben sein oder werden bzw. derart angetrieben sein oder werden, dass die Behandlungselement-Welle eine bestimmte Schneckendrehzahl aufweist. Die Behandlungselement-Welle kann eine Extruderschnecke sein. In einer Ausführungsvariante kann das Plastifizieren mittels zwei Behandlungselement-Wellen der Schneckenmaschine erfolgen. Die Schneckenmaschine kann daher eine Mehrwellen-Schneckenmaschine, zum Beispiel eine Zweiwellen-Schneckenmaschine, sein. Die Schneckenmaschine kann als gleichsinnig oder gegensinnig drehangetriebene und/oder dicht kämmende Mehrwellen-Schneckenmaschine ausgebildet und derart angetrieben sein oder werden. Die Schneckenmaschine kann ein Extruder, insbesondere ein Mehrwellenextruder, z.B. Doppelschneckenextruder, sein.

Mittels der Schneckenmaschine kann dann die Kunststoffschmelze aufbereitet werden. Dabei kann die Viskosität der Kunststoffschmelze mittels der Schneckendrehzahl der Schneckenmaschine eingestellt sein oder werden. Das Einstellen der Viskosität kann ein Einstellen des Schmelzindex (Melt Flow Index, MFI) der Kunststoffschmelze sein und/oder umfassen. Der Schmelzindex kann der resultierende Schmelzindex, beispielsweise des Produkts, sein. Die Viskosität bzw. der Schmelzindex der Kunststoffschmelze kann mittels der Schmelzetemperatur eingestellt, gesteuert und/oder kontrolliert sein oder werden. Dabei kann ein Zusammenhang zwischen der Viskosität bzw. dem Schmelzindex und der Schmelzetemperatur bestimmt und/oder vorgegeben sein oder werden. Der Zusammenhang zwischen Viskosität bzw. Schmelzindex und Schmelzetemperatur kann rezepturabhängig sein, d.h. von der Rezeptur der Kunststoffschmelze und/oder der Rezeptur des zugeführten Kunststoffmaterials anhängen. Der Zusammenhang zwischen Viskosität bzw. Schmelzindex und Schmelzetemperatur kann daher in Abhängigkeit der Rezeptur bestimmt sein oder werden. Ferner kann ein Zusammenhang zwischen der Schmelzetemperatur und der Schneckendrehzahl bestimmt und/oder vorgegeben sein oder werden.

Bei dem Verfahren kann die Viskosität bzw. der Schmelzindex der Kunststoffschmelze erhöht, gehalten oder verringert werden. Zusätzlich oder alternativ kann die Schmelzetemperatur der Kunststoffschmelze erhöht, gehalten oder verringert werden. Beispielsweise kann durch Erhöhen, Halten oder Verringern der Schmelzetemperatur die Viskosität bzw. der Schmelzindex der Kunststoffschmelze beeinflusst und/oder eingestellt werden. Dabei kann durch Erhöhung der Schmelzetemperatur die Viskosität bzw. der Schmelzindex erhöht werden bzw. durch Verringerung der Schmelzetemperatur die Viskosität bzw. der Schmelzindex verringert werden. Zusätzlich oder alternativ kann die Schneckendrehzahl der Schneckenmaschine erhöht, gehalten oder verringert werden. Insbesondere kann die Schmelzetemperatur der Kunststoffschmelze mittels der Schneckendrehzahl der Schneckenmaschine eingestellt und/oder geregelt werden. Dabei kann durch Erhöhen, Halten oder Verringern der Schneckendrehzahl die Schmelzetemperatur beeinflusst und/oder eingestellt werden. Beispielsweise kann durch Erhöhung der Schneckendrehzahl die Schmelzetemperatur erhöht werden bzw. durch Verringerung der Schneckendrehzahl die Schmelzetemperatur verringert werden. Somit kann mittels der Schneckendrehzahl die Viskosität bzw. der Schmelzindex der Kunststoffschmelze indirekt eingestellt werden. Ferner kann die Viskosität bzw. der Schmelzindex der Kunststoffschmelze mittels der Schmelzetemperatur indirekt überwacht und/oder gesteuert werden.

In einer Ausführungsvariante kann eine Schmelze-Zieltemperatur der Kunststoffschmelze vorgegeben oder bestimmt sein oder werden. Die Schmelze-Zieltemperatur kann dann durch Einstellen und/oder Regelung der Schneckendrehzahl eingestellt sein oder werden. Dabei kann unter Einstellen das Erhöhen, Halten und/oder Verringern der Schneckendrehzahl verstanden werden. Mittels der Schmelze-Zieltemperatur kann somit die Viskosität bzw. der Schmelzindex der Kunststoffschmelze eingestellt und/oder angepasst werden. Bei dem Verfahren kann die Schmelze-Zieltemperatur basierend auf einer vorgegebenen oder ermittelten Rezeptur der Kunststoffschmelze und/oder einer Zusammensetzung des zugeführten Kunststoffmaterials und/oder einer vorgegebenen Ziel-Viskosität bzw. einem vorgegebenen Ziel-Schmelzindex bestimmt sein oder werden. Beispielsweise kann die Schmelze-Zieltemperatur fortlaufend, insbesondere in regelmäßigen Zeitabständen und/oder bei vorgegebenen Ereignissen, oder kontinuierlich bestimmt sein oder werden. Dabei können die vorgegebenen Ereignisse das Erreichen bestimmter Prozessparameter und/oder das Zufügen von neuem oder anderem Kunststoffmaterial umfassen. Ferner kann die Regelung und/oder Einstellung der Schneckendrehzahl und/oder die Bestimmung der Schmelze-Zieltemperatur automatisch oder manuell erfolgen.

Bei dem Verfahren kann die Schmelzetemperatur der Kunststoffschmelze, beispielsweise fortlaufend oder kontinuierlich, erfasst sein oder werden. Dabei kann es sich um die aktuelle bzw. tatsächliche Schmelzetemperatur der Kunststoffschmelze handeln. Das Erfassen der Schmelzetemperatur kann mittels eines Temperatursensors erfolgen. Basierend auf der erfassten Schmelzetemperatur kann dann ein Wert für die Viskosität bzw. den Schmelzindex der Kunststoffschmelze ermittelt sein oder werden.

In einer Ausführungsvariante kann dem Kunststoffmaterial und/oder der Kunststoffschmelze zumindest ein Zusatzstoff zugeführt sein oder werden. Der Zusatzstoff kann ein Additiv, Hilfsstoff, Füllstoff, Talkum, Stabilisator, Modifier, Schlagzähmodifier, Antioxidant, Farbstoff oder Wasser sein oder umfassen. Beispielsweise kann der Zusatzsoff pulverförmig, granulatförmig oder flüssig sein. Durch Zugabe des Zusatzstoffes kann die Viskosität bzw. der Schmelzindex der Kunststoffschmelze beeinflusst, insbesondere erhöht oder verringert, werden. Der Zusatzstoff kann insbesondere in die Schneckenmaschine zugeführt werden. Vorzugsweise kann der zumindest eine Zusatzstoff während des Plastifizierens und/oder während des Aufbereitens in die Kunststoffschmelze eingemischt werden. Das Zuführen des Zusatzstoffes kann kontinuierlich und/oder dosiert erfolgen. Alternativ kann das Zuführen des Zusatzstoffes diskontinuierlich erfolgen. Beispielsweise kann das Zuführen des Zusatzstoffes über eine Zuführöffnung der Schneckenmaschine erfolgen. Die Zuführöffnung kann die Haupt-Zuführöffnung oder eine Neben-Zuführöffnung der Schneckenmaschine sein. Die Neben-Zuführöffnung kann vor einer Entgasung vorgesehen sein. Zum Beispiel kann das Zuführen des Zusatzstoffes in eine Einzugszone, Aufschmelzzone und/oder Mischzone der Schneckenmaschine erfolgen. Der Zusatzstoff kann auch zusammen mit dem Kunststoffmaterial zugeführt werden. In einer Variante kann das Zuführen des Zusatzstoffes stromabwärts der Haupt-Zuführöffnung bzw. Einzugszone der Schneckenmaschine erfolgen. Ferner kann sowohl der Haupt-Zuführöffnung als auch der Neben-Zuführöffnung und damit in die Einzugszone und zumindest in eine der Einzugszone nachfolgenden Zone, beispielsweise der Aufschmelzzone und/oder Mischzone, jeweils ein Zusatzstoff zugeführt werden. In einer Variante kann das Zuführen des Zusatzstoffes mittels einer Zuführeinrichtung und/oder Dosiereinrichtung erfolgen. Die Zuführeinrichtung kann eine Zuführschneckenmaschine sein. Die Zuführschneckenmaschine kann beispielsweise als, insbesondere zweiwellige, Seitenbeschickungsschneckenmaschine ausgebildet sein.

Das Plastifizieren und/oder das Aufbereiten des Kunststoffmaterials kann insbesondere die Schritte Einmischen, Aufschmelzen, Homogenisieren und/oder Entgasen umfassen. Sodann kann die aufbereitete Kunststoffschmelze beispielsweise einer Filtervorrichtung und/oder Granuliervorrichtung oder einer anderen Weiterverarbeitungsanlage zugeführt werden.

Ein weiterer Aspekt betrifft eine Vorrichtung zur Aufbereitung von Kunststoffmaterial, insbesondere des vorstehend und/oder nachfolgend beschriebenen Kunststoffmaterials. Bei dem Kunststoffmaterial kann es sich daher beispielsweise um Kunststoff-Recyclingmaterial, insbesondere HDPE-Kunststoffmaterial oder PP-Kunststoffmaterial, handeln. Die Vorrichtung kann eine Aufbereitungsanlage sein.

Vorzugsweise umfasst die Vorrichtung eine Schneckenmaschine mit zumindest einer Zuführöffnung zum Zuführen des Kunststoffmaterials in die Schneckenmaschine und zumindest einer Behandlungselement-Welle zum Plastifizieren des zugeführten Kunststoffmaterials zu einer Kunststoffschmelze und zum Aufbereiten der Kunststoffschmelze. Die Schneckenmaschine kann eine Mehrwellen-Schneckenmaschine, insbesondere ein Mehrwellenextruder sein. Dabei kann die Schneckenmaschine als gleichsinnig oder gegensinnig drehangetriebene und/oder dicht kämmende Mehrwellen-Schneckenmaschine ausgebildet sein. Beispielsweise kann die Schneckenmaschine eine Zweiwellen-Schneckenmaschine bzw. ein Doppelschneckenextruder sein.

Insbesondere kann/können die Vorrichtung und/oder die Schneckenmaschine ausgebildet sein, die Viskosität und/oder den Schmelzindex der Kunststoffschmelze mittels der Schneckendrehzahl der Schneckenmaschine einzustellen. Die Vorrichtung kann insbesondere auch mit mindestens einem Merkmal weitergebildet werden, das in Zusammenhang mit dem Verfahren beschrieben ist. Somit kann/können die Vorrichtung und/oder die Schneckenmaschine dazu eingerichtet und bestimmt sein, das vorstehend und/oder nachfolgend beschriebene Verfahren auszuführen.

Die zumindest eine Behandlungselement-Welle kann eine Extruderschnecke sein. In einer Ausführungsvariante kann die Behandlungselement-Welle einen Durchmesser und eine Verfahrenslänge aufweisen, wobei die Verfahrenslänge mindestens das 36-fache des Durchmessers beträgt. Die Behandlungselement-Welle kann eine stark restriktive Schnecke sein, beispielsweise mit mindestens drei linken Förderelementen. Die Schneckenmaschine und/oder die zumindest eine Behandlungselement-Welle kann/können insbesondere zum Erreichen einer Schmelzetemperatur von größer 300°C, vorzugsweise größer 360°C, ausgebildet sein. Die Schneckenmaschine kann hierzu zum Einstellen einer entsprechenden Schneckendrehzahl ausgebildet sein.

Ferner kann die Vorrichtung eine Entgasungseinrichtung zum Entgasen der Kunststoffschmelze aufweisen. Die Entgasungseinrichtung kann mit der Schneckenmaschine gekoppelt sein. Zusätzlich oder alternativ kann die Vorrichtung eine Wasserzuführeinrichtung zum Zuführen von Wasser in die Kunststoffschmelze aufweisen. Die Wasserzuführeinrichtung kann mit der Schneckenmaschine gekoppelt sein. Des Weiteren kann die Vorrichtung zumindest eine Zuführeinrichtung und/oder Dosiereinrichtung zum Zuführen zumindest eines Zusatzstoffes in das Kunststoffmaterial oder in die Kunststoffschmelze aufweisen. Die Zuführeinrichtung kann eine Zuführschneckenmaschine sein oder umfassen, insbesondere eine, beispielsweise zweiwellige, Seitenbeschickungsschneckenmaschine.

Mit der Erfindung können schwankende Eingangsviskositäten, insbesondere mittels Drehzahlanpassung, optimal ausgeglichen werden. Ferner kann ein gewünschter Schmelzindex eingestellt und/oder gehalten werden, beispielsweise auch dann, wenn neues Kunststoffmaterial oder Kunststoffmaterial mit einer anderen Zusammensatzung der Schneckenmaschine zugeführt wird. Der Abbau von HDPE oder dergleichen kann über einen rein mechanischen Energieeintrag erfolgen. Eine Zugabe von Virgin-Polymer zur Einstellung des Schmelzindex ist nicht mehr notwendig. Der Rezyklat-Anteil im Endprodukt kann daher erhöht werden. Auch der Einsatz eines Viskosimeters ist nicht mehr zwingend notwendig.

Nachfolgend werden Ausführungsbeispiele der Erfindung unter Bezugnahme auf Figuren näher beschrieben, dabei zeigen schematisch und beispielhaft:

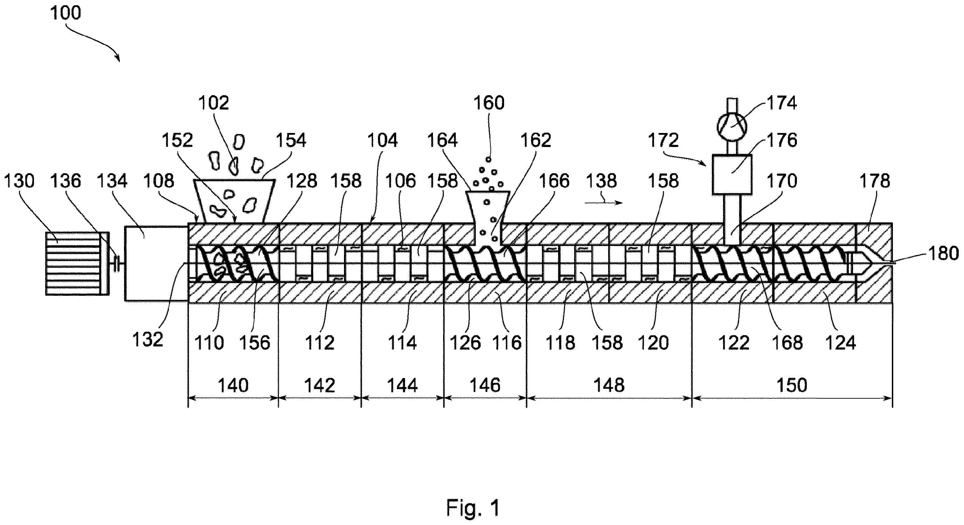

Fig. 1 eine teilweise geschnittene Ansicht einer Vorrichtung zur Aufbereitung von Kunststoffmaterial.

Fig. 1 zeigt eine Aufbereitungsvorrichtung 100 zur Aufbereitung von Kunststoff-Recyclingmaterial 102, insbesondere HDPE-Kunststoff-Recyclingmaterial. Die Aufbereitungsvorrichtung 100 umfasst eine Mehrwellenschneckenmaschine 104, die zum Plastifizieren des Kunststoff-Recyclingmaterials 102 zu einer Kunststoffschmelze 106 und zum Aufbereiten der Kunststoffschmelze 106 dient.

Die Mehrwellenschneckenmaschine 104 ist als gleichsinnig rotierende Zweiwellenschneckenmaschine ausgebildet. Die Mehrwellenschneckenmaschine 104 umfasst ein Gehäuse 108 aus mehreren nacheinander angeordneten Gehäuseabschnitten 110 bis 124, die zur Ausbildung des Gehäuses 108 miteinander verbunden sind. In dem Gehäuse 108 sind zwei zueinander parallele und einander durchdringende Gehäusebohrungen 126 ausgebildet, die im Querschnitt die Form einer liegenden Acht haben. Die Mehrwellenschneckenmaschine 104 umfasst ferner zwei in den Gehäusebohrungen 126 konzentrisch angeordnete Behandlungselement-Wellen 128, die von einem Antriebsmotor 130 um zugehörige Drehachsen 132 drehantreibbar sind. Zwischen den Behandlungselementwellen 128 und dem Antriebsmotor 130 sind ein Verzweigungsgetriebe 134 und eine Kupplung 136 angeordnet. Mittels des Antriebsmotors 130 werden die beiden Behandlungselement-Wellen 128 gleichsinnig, d.h. in gleichen Drehrichtungen, um die Drehachsen 132 drehangetrieben. Die Behandlungselement-Wellen 128 weisen einen Durchmesser und eine Verfahrenslänge auf, wobei die Verfahrenslänge mindestens das 36-fache des Durchmessers beträgt. Ferner sind die Behandlungselement-Wellen 128 zum Plastifizieren des zugeführten Kunststoff-Recyclingmaterials 102 zu der Kunststoffschmelze 106 und zum Aufbereiten der Kunststoffschmelze 106 ausgebildet.

Wie in Fig. 1 dargestellt, weist die Mehrwellenschneckenmaschine 104 in einer Förderrichtung 138 nacheinander eine Einzugszone 140, eine Plastifizierzone 142, eine Homogenisierungszone 144, eine Zuführzone 146, eine Mischzone 148 und eine Austragszone 150 auf.

In der Einzugszone 140 weist der Gehäuseabschnitt 110 eine Zuführöffnung 152 mit einem Haupt-Einlauftrichter 154zum Zuführen des Kunststoff-Recyclingmaterials 102 in die Mehrwellenschneckenmaschine 104 auf. Die Behandlungselement-Wellen 128 umfassen in der Einzugszone 140 Schneckenelemente 156 zum Fördern des Kunststoff-Recyclingmaterials 102 in Förderrichtung 138.

In der Plastifizierzone 142 erfolgt ein Aufschmelzen des Kunststoff-Recyclingmaterials 102. Zum Aufschmelzen weisen die Behandlungselement-Wellen 128 in der Plastifizierzone 142 als Knetscheiben ausgebildete Knetelemente 158 auf. In der Plastifizierzone 142 wird das Kunststoff-Recyclingmaterials 102 zu der Kunststoffschmelze 106 aufgeschmolzen.

In der Homogenisierungszone 144 wird die Kunststoffschmelze 106 homogenisiert. Die Behandlungselement-Wellen 128 weisen in der Homogenisierungszone 144 ebenfalls als Knetscheiben ausgebildete Knetelemente 158 auf.

In der Zuführzone 146 wir der Kunststoffschmelze 106 zumindest ein Zusatzstoff 160 zugeführt. Der Zusatzstoff 160 kann beispielsweise ein Additiv, Modifier, wie Schlagzähmodifier, Antioxidant, Farbstoff oder Wasser sein. Hierzu ist in dem Gehäuseabschnitt 116 eine Zuführöffnung 162 ausgebildet, in die ein Zuführtrichter 164 mündet. Der Zusatzstoff wird beispielsweise mit einer Dosiereinrichtung in den Zuführtrichter 164 und/oder über eine Zuführschneckenmaschine (in Fig. 1 nicht dargestellt) in die Mehrwellenschneckenmaschine 104 zugeführt. In der Zuführzone 162 weisen die Behandlungselement-Wellen 128 Schneckenelemente 166, beispielsweise Förder-Schneckenelemente zum Fördern der Kunststoffschmelze 106 und des zumindest einen Zusatzstoffes 160 in Förderrichtung 138, auf.

In der Mischzone 148 wird der zumindest eine Zusatzstoff 160 aufgeschmolzen und/oder in die Kunststoffschmelze 106 eingemischt. Dabei kann die Mischung homogenisiert werden. Die Behandlungselement-Wellen 128 weisen in der Mischzone 148 als Knetscheiben ausgebildete Knetelemente 158 auf.

In der Austragszone 150 weisen die Behandlungselement-Wellen 128 Förder-Schneckenelemente 168 zum Austragen der aufbereiteten Kunststoffschmelze 106 auf. Ferner ist in dem Gehäuseabschnitt 122 eine Entgasungsöffnung 170 ausgebildet. Die Entgasungsöffnung 170 ist an eine Vakuum-Entgasungseinrichtung 172 angeschlossen, sodass die Kunststoffschmelze 106 über die Entgasungsöffnung 170 mittels der Vakuum-Entgasungseinrichtung 172 entgast wird. Die Vakuum-Entgasungseinrichtung 172 umfasst eine Vakuumpumpe 174, die über einen Abscheider 176 an die Entgasungsöffnung 170 angeschlossen ist. An dem letzten Gehäuseabschnitt 124 ist eine das Gehäuse 108 abschließende Düsenplatte 178 angeordnet, die eine Austragsöffnung 180 ausbildet. An der Austragsöffnung 180 kann eine Filtervorrichtung und/oder Granuliervorrichtung oder eine andere Weiterverarbeitungsanlage angeschlossen sein (in Fig. 1 nicht näher dargestellt).

Die Aufbereitungsvorrichtung 100 bzw. dessen Mehrwellenschneckenmaschine 104 ist insbesondere ausgebildet, die Viskosität und/oder den Schmelzindex der Kunststoffschmelze 106 mittels der Schneckendrehzahl der Mehrwellenschneckenmaschine 104 einzustellen. Nachfolgend ist die Aufbereitung des Kunststoff-Recyclingmaterials 102 mittels der Aufbereitungsvorrichtung 100 beschrieben.

Das zerkleinerte Kunststoff-Recyclingmaterial 102 wird mittels einer Zuführvorrichtung und über den Haupt-Einlauftrichter 154 in die Mehrwellenschneckenmaschine 104 zugeführt und gelangt dann in die Einzugszone 140. In der Einzugszone 140 wird das Kunststoff-Recyclingmaterial 102 in der Förderrichtung 138 zu der Plastifizierzone 142 gefördert. Sodann wird das zugeführte Kunststoff-Recyclingmaterial 102 in der Plastifizierzone 142 mittels der Behandlungselement-Wellen 128 bzw. deren Knetelemente 158 aufgeschmolzen und die Kunststoffschmelze 106 in der Homogenisierungszone 144 homogenisiert.

In der Zuführzone 146 wird über die Zuführöffnung 162 zumindest ein Zusatzstoff, wie zum Beispiel ein Additiv, Modifier, Antioxidant oder Wasser, der Kunststoffschmelze 1 06 zugeführt. In der Mischzone 148 wird der zumindest ein Zusatzstoff aufgeschmolzen und in die Kunststoffschmelze 106 eingemischt. Die Mischung kann hier auch homogenisiert werden. Aus der Kunststoffschmelze 1 06 entweichende Gase werden mittels der Vakuum-Entgasungseinrichtung 172 abgeführt.

Während der Aufbereitung der Kunststoffschmelze 1 06 durch die Mehrwellenschneckenmaschine 104 wird die Viskosität bzw. der Schmelzindex der Kunststoffschmelze 106 mittels der Schneckendrehzahl eingestellt. Dabei wird der Schmelzindex der Kunststoffschmelze 106 erhöht, gehalten oder verringert.

Das Einstellen bzw. Anpassen des Schmelzindex erfolgt über die Schmelzetemperatur, die durch Einstellen und/oder Regeln der Schneckendrehzahl entsprechend eingestellt und/oder geregelt wird. Vorzugsweise wird eine Schmelze-Zieltemperatur der Kunststoffschmelze 106 basierend auf einer vorgegebenen oder ermittelten Rezeptur der Kunststoffschmelze 1 06 und/oder einer Zusammensetzung des zugeführten Kunststoff-Recyclingmaterials 102 und/oder einer vorgegebenen Ziel-Viskosität bzw. einem vorgegebenen Ziel-Schmelzindex bestimmt. Die Schmelze-Zieltemperatur kann dabei fortlaufend, beispielsweise in regelmäßigen Zeitabständen und/oder bei vorgegebenen Ereignissen, oder kontinuierlich bestimmt werden. Die tatsächliche Schmelzetemperatur der Kunststoffschmelze 106 wird, insbesondere fortlaufend oder kontinuierlich, erfasst und/oder überwacht, beispielsweise mittels eines Temperatursensors.

Die Schmelze-Zieltemperatur entspricht einem bestimmten Ziel-Schmelzindex. Um die bestimmte Schmelze-Zieltemperatur zu erreichen, wird die Schneckendrehzahl der Behandlungselement-Wellen 128 entsprechend eingestellt bzw. geregelt, beispielsweise erhöht, gehalten oder verringert. Durch das Anpassen der Schneckendrehzahl wird die tatsächliche Schmelzetemperatur der Kunststoffschmelze 1 06 entsprechend erhöht, gehalten oder verringert. Dies wirkt sich auf den Schmelzindex aus, sodass dieser entsprechend erhöht, gehalten oder verringert wird. Eine schwankende Eingangsviskosität kann damit optimal ausgeglichen bzw. auf einen gewünschten Schmelzindex eingestellt und gehalten werden. Dies ist insbesondere vorteilhaft, wenn neues Kunststoff-Recyclingmaterial oder Kunststoff-Recyclingmaterial mit einer anderen Zusammensatzung der Mehrwellenschneckenmaschine 104 zugeführt wird.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

### Bezugszeichen

- 100: Aufbereitungsvorrichtung
- 102: Kunststoff-Recyclingmaterial
- 104: Mehrwellenschneckenmaschine
- 106: Kunststoffschmelze
- 108: Gehäuse
- 110-124: Gehäuseabschnitte
- 126: Gehäusebohrungen
- 128: Behandlungselement-Wellen
- 130: Antriebsmotor
- 132: Drehachsen
- 134: Verzweigungsgetriebe
- 136: Kupplung
- 138: Förderrichtung
- 140: Einzugszone
- 142: Plastifizierzone
- 144: Homogenisierungszone
- 146: Zuführzone
- 148: Mischzone
- 150: Austragszone
- 152: Zuführöffnung
- 154: Haupt-Einlauftrichter
- 156: Förder-Schneckenelemente
- 158: Knetelemente
- 160: Zusatzstoff
- 162: Zuführöffnung
- 164: Zuführtrichter
- 166: Schneckenelemente
- 168: Förder-Schneckenelemente
- 170: Entgasungsöffnung
- 172: Vakuum-Entgasungseinrichtung
- 174: Vakuumpumpe
- 176: Abscheider
- 178: Düsenplatte
- 180: Austragsöffnung

## Patentansprüche

1. Verfahren zur Aufbereitung von Kunststoffmaterial (102), umfassend folgende Schritte:
- Zuführen des Kunststoffmaterials (102) in eine Schneckenmaschine (104) mittels einer Zuführvorrichtung;
- Plastifizieren des zugeführten Kunststoffmaterials (102) mittels der Schneckenmaschine (104) zu einer Kunststoffschmelze (106); und
- Aufbereiten der Kunststoffschmelze (106) mittels der Schneckenmaschine (104), wobei die Viskosität der Kunststoffschmelze (106) mittels der Schneckendrehzahl der Schneckenmaschine (104) eingestellt wird.

2. Verfahren nach Anspruch 1, **dadurch gekennzeichnet, dass** das Einstellen der Viskosität ein Einstellen des Schmelzindex der Kunststoffschmelze (106) ist und/oder umfasst.

3. Verfahren nach wenigstens einem der vorhergehenden Ansprüche, **dadurch gekennzeichnet, dass**
- die Viskosität bzw. der Schmelzindex der Kunststoffschmelze (106) erhöht, gehalten oder verringert wird, und/oder dass
- die Schmelzetemperatur der Kunststoffschmelze (106) erhöht, gehalten oder verringert wird, und/oder dass
- die Schneckendrehzahl der Schneckenmaschine (104) erhöht, gehalten oder verringert wird.

4. Verfahren nach wenigstens einem der vorhergehenden Ansprüche, **dadurch gekennzeichnet, dass** die Schmelzetemperatur der Kunststoffschmelze (106) mittels der Schneckendrehzahl der Schneckenmaschine (104) eingestellt und/oder geregelt wird.

5. Verfahren nach wenigstens einem der vorhergehenden Ansprüche, **dadurch gekennzeichnet, dass** eine Schmelze-Zieltemperatur der Kunststoffschmelze (106) vorgegeben oder bestimmt wird, die dann durch Einstellen und/oder Regelung der Schneckendrehzahl eingestellt wird.

6. Verfahren nach Anspruch 5, **dadurch gekennzeichnet, dass** die Schmelze-Zieltemperatur basierend auf einer vorgegebenen oder ermittelten Rezeptur der Kunststoffschmelze (106) und/oder einer Zusammensetzung des zugeführten Kunststoffmaterials (102) und/oder einer vorgegebenen Ziel-Viskosität bzw. einem vorgegebenen Ziel-Schmelzindex bestimmt wird.

7. Verfahren nach Anspruch 5 oder 6, **dadurch gekennzeichnet, dass** die Schmelze-Zieltemperatur fortlaufend, insbesondere in regelmäßigen Zeitabständen und/oder bei vorgegebenen Ereignissen, oder kontinuierlich bestimmt wird.

8. Verfahren nach wenigstens einem der vorhergehenden Ansprüche 5 bis 7, **dadurch gekennzeichnet, dass** mittels der Schmelze-Zieltemperatur die Viskosität bzw. der Schmelzindex der Kunststoffschmelze (106) eingestellt und/oder angepasst wird.

9. Verfahren nach wenigstens einem der vorhergehenden Ansprüche, **dadurch gekennzeichnet, dass** die Regelung der Schneckendrehzahl und/oder die Bestimmung der Schmelze-Zieltemperatur automatisch erfolgt.

10. Verfahren nach wenigstens einem der vorhergehenden Ansprüche, **dadurch gekennzeichnet, dass** die Schmelzetemperatur der Kunststoffschmelze (106), insbesondere fortlaufend oder kontinuierlich, erfasst wird, insbesondere mittels eines Temperatursensors.

11. Verfahren nach Anspruch 10, **dadurch gekennzeichnet, dass** basierend auf der erfassten Schmelzetemperatur ein Wert für die Viskosität bzw. den Schmelzindex der Kunststoffschmelze (106) ermittelt wird.

12. Verfahren nach wenigstens einem der vorhergehenden Ansprüche, **dadurch gekennzeichnet, dass** dem Kunststoffmaterial (102) und/oder der Kunststoffschmelze (106) zumindest ein Zusatzstoff hinzugefügt wird und/oder dass die Kunststoffschmelze (106) homogenisiert und/oder entgast und/oder einer Filtervorrichtung und/oder Granuliervorrichtung zugeführt wird.

13. Verfahren nach wenigstens einem der vorhergehenden Ansprüche, **dadurch gekennzeichnet, dass** die Schneckenmaschine (104) eine Mehrwellen-Schneckenmaschine, insbesondere eine Zweiwellen-Schneckenmaschine, ist.

14. Vorrichtung (100) zur Aufbereitung von Kunststoffmaterial (102), umfassend eine Schneckenmaschine (104), insbesondere Mehrwellen-Schneckenmaschine, mit
- zumindest einer Zuführöffnung (152) zum Zuführen des Kunststoffmaterials (102) in die Schneckenmaschine (104); und
- zumindest einer Behandlungselement-Welle (128) zum Plastifizieren des zugeführten Kunststoffmaterials (102) zu einer Kunststoffschmelze (106) und zum Aufbereiten der Kunststoffschmelze (106),
wobei die Vorrichtung (100) und/oder Schneckenmaschine (104) ausgebildet ist, die Viskosität und/oder den Schmelzindex der Kunststoffschmelze (106) mittels der Schneckendrehzahl der Schneckenmaschine (104) einzustellen.

15. Vorrichtung (100) nach Anspruch 14, **dadurch gekennzeichnet, dass** die zumindest eine Behandlungselement-Welle (128) einen Durchmesser und eine Verfahrenslänge aufweist, wobei die Verfahrenslänge mindestens das 36-fache des Durchmessers beträgt.

16. Vorrichtung (100) nach Anspruch 14 oder 15, **dadurch gekennzeichnet, dass** die Vorrichtung (100) und/oder die Schneckenmaschine (104) dazu eingerichtet und bestimmt ist/sind, ein Verfahren nach wenigstens einem der vorhergehenden Ansprüche 1 bis 13 auszuführen.
